Europäisches Patentamt

European Patent Office

Office européen des brevets

(19)

(11) Publication number : **0 512 966 A1**

(12) # EUROPEAN PATENT APPLICATION

(21) Application number : **92850099.0**

(22) Date of filing : **05.05.92**

(51) Int. Cl.⁵ : **A01C 3/02**

(30) Priority : **06.05.91 SE 9101347**

(43) Date of publication of application :
**11.11.92 Bulletin 92/46**

(84) Designated Contracting States :
**AT BE CH DE DK ES FR GB GR IT LI LU MC NL PT SE**

(71) Applicant : **Larsson, Ulf**
**Knektvägen 9**
**S-510 20 Fritsla (SE)**

(72) Inventor : **Larsson, Ulf**
**Knektvägen 9**
**S-510 20 Fritsla (SE)**

(74) Representative : **Roth, Ernst Adolf Michael et al**
**GÖTEBORGS PATENTBYRA AB Box 5005**
**S-402 21 Göteborg (SE)**

(54) **Slurry mixing apparatus.**

(57)    Device at reservoirs, in particular manure reservoirs of the type, which includes a container
(3) closed att the bottom with means for supply
of at least semi-liquid material, and with means
constituting at least one stirrer (35) immerseable in the container and movable therein, rotatable about an axis,extending downwards,
which stirrer is constituted by a rotor, rotably
suspended in a holder (37) driven by a motor
(38), and where the rotor is provided with knives
(36) arranged to cooperate with counter knives
(37) developed at the holder intended in cooperation to disintegrate and stir material stored in
the reservoir.

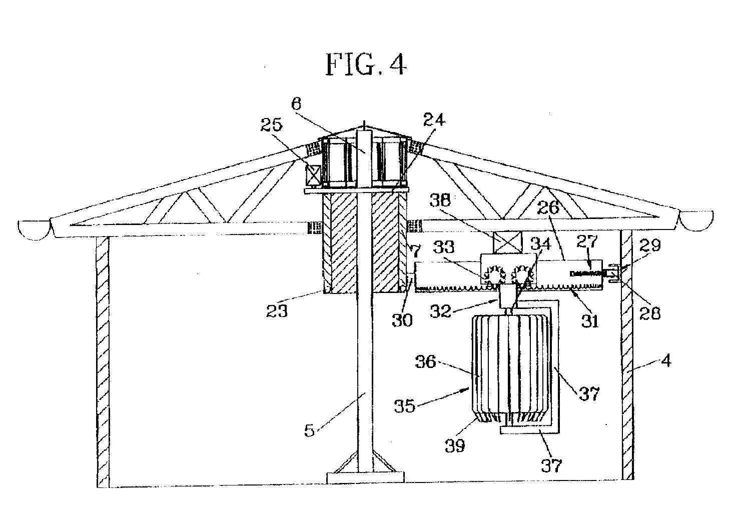

FIG. 4

EP 0 512 966 A1

## The background of the invention

The present invention refers to a device at reservoirs, in particular manure reservoirs of the type which includes a container closed at the bottom with means for supply of at least semi-liquid material, and with stirring means in the form of at least one mechanical agitator extending downwards into the container immerseable and movable therein, rotateable about an axis, which mechanical agitator is constituted by in a holder rotateably supported rotor driven by a motor.

By agriculture with cattle keeping the manure obtained is frequently stored in manure reservoirs with cylindric form and, which can have diameters from 8 and up to 30 meters, depending on the size of the stock of animals. Traditionally such manure containers have been open, that is, they have lacked coverage, which creates a problem, since the semi-liguid mass, which is pumped to the container from the cowhouse, shed or the like, will spread a smell and attract flies, and primarily by the contents, which by a later occasion is going to be spread onto the ground for fertilizing purposes, will have a consistency difficult to control and strongly dependent of weather and wind. In this manner at dry periods much of the liquid content will evaporate and the contents of the reservoir will be baked together to a compact crust formation, in which soon grass and weed can begin to grow, and by hard and/or continous rain periodes great multitudes of liquid will be supplied, which will result in brimming over of the container with unwanted outflows of liquid manure as result, in particular with regard to the authorities prescribing that manure spreading only is allowed during certain times of the year.

In order to be spread as liquid manure the contents of the reservoir must have a certain consistency in order to be pumped up from the reservoir and is driven out onto the spreading area in a tank car. As a result of present regulations in addition certain conditions have to be fulfilled, and therefore a possibility to control consistency and thereby also the liquid content in the reservoir is highly desirable. Since the mass present in the reservoir frequently contains straw and other incompletely melted and decomposed plant parts conventional stirrers of wing type cannot achieve sufficient break up of the mass, which requires possibility to decompose among others the straw.

## The purpose of the invention and most important features

The purpose with the present invention is to offer a device at reservoirs of the type described by way of introduction, whereby the above described problems to a high degree are eliminated, and this is achieved mainly by a rotor being provided with knives arranged to cooperate with counter knives at the holder developed intended to interacting decompose and stir material stored in the reservoir.

## Specification of drawings

In the following the invention will be described in closer detail with reference to the embodiment shown in the enclosed drawings.

Fig. 1 discloses in lateral view and section diagrammatically a manure reservoir in connection to a cow-house provided manure reservoir provided with means for control of liquid supply.

Fig. 2 is a lateral view in section in enlarged scale of a part of the device according to Fig. 1, and Fig. 3 is a view from the above of a part of the device in Fig. 2.

Fig. 4 discloses in a diagrammatic section the device according to the invention provided in a manure reservoir.

Fig. 5 discloses in a diagrammatic section along the line V-V in Fig. 6 an application with a manure stirrer provided in a rectangularly shaped reservoir.

Fig. 6 is a view from the above of the application shown in Fig. 5.

## Specification of preferred embodiments

In Fig. 1 is shown diagrammatically and partly in section shown lateral view a part of a cow-house 1 with means 2 to convey to a manure reservoir 3 a preferably in water silted up composition of manure and urine, which has been produced in the cow-house or the like. The manure reservoir is as well provided with means 4 for pumping out its contents to a tank not shown for further transport to a user location.

The device according to the invention includes a centrally located, vertical pillar 5, which rests on or is anchored to the bottom of the reservoir and with its upper end 6 extends somewhat above the upper edge surface of the reservoir. The pillar 5 at its part protruding over the container supports a roof structure 8 provided with a hubformed center 7 centered about the upper part of the pillar and including a crossbar structure roof truss 9 with a cover 10 provided thereon. About the periphery of the roof cover is preferably arranged a gutter 11 provided with drainage pipes 12, 13, which are provided with taps by means of which the contents of the gutter can be used to , 12, increase the liquid content in the interior of the manure reservoir respectively. used to, 13, empty the gutter in a surface water basin or the like. As diluting liquid however instead also milk water or urine can be used.

Fig. 2 discloses in larger scale the upper part 6 of the pillar and the major part of the roof structure 8 centering thereabout, and as shown includes the hub shaped center 7 of the roof structure centered about the pillar top part 6, two groups of at mutual distance arranged spoke shaped arms 14, which in pairs between the two groups support bars 15 fixed to the external ends of these spoke shaped arms 14, essentially parallel to the pillar 5, 6. As is evident from Fig. 3, which discloses a view from the above of a portion of the construction according to Fig. 1 and 2, the center structure 7 in the case shown eight spoke shaped arms 14 in each group, which groups thereby between themselves support eight stands. Between each pair to each other adjoining support bars 15 are provided thereto connected rectangular braced pipes 15a, which hold together the center part 7.

To each pillar at the bottom via angle sheet-irons 16 is connected a horizontal stay 17 and at the top a cross stay 18, which along its extension are mutually joined by cross stays 19 to each a lattice beam 20, which extends from the end of respective arm 14, that is from the circumference of the hub formed center 7 to outside the wall of the resevoir , whereby each lattice beam in the proximity of its external part rests against the reservoir wall (see Fig.1), at the same time as it with its inner part is supported against the upper part 6 of the pillar 5.

The lattice beams 20 which extend spoke shaped from the hub formed center 7 support a roof covering material 21, which in the example shown is not shown in particular, but preferably are constituted by cake shaped, each other overlapping covering element, of suitable material, for example plate or plastic.

The length of the part 6 of the central pillar which protrudes over the upper rim of the reservoir is chosen in relation to the diameter of the reservoir such that the roofing 21 will obtain an appropriate inclination for rain-water to be collected in the gutter shown in Fig. 1, and this inclination can preferably can be 15°.

The hub formed center 7 is preferably provided with eye bolts 22, in the example shown fastened to the support bars 15, by means of which a roof structure of this type can be built at the side of th manure reservoir and with the assistance of a mobile crane or helicopter be lifted onto site to be centrered onto the upper part 6 of the pillar 5.

In Fig. 4 is shown schematically and in section a device according to the invention, whereby the device is located in a manure reservoir 3 on the bottom of which centrally provided vertical pillar 5 is supported, the upper part of which extends above the rim of the reservoir and serves as a centering for a hub shaped center 7, which in a manner similar to the embodiment according to Fig. 1 to 3 can support a roof structure. In those cases when the diameter of the reservoir is not too large the roof structure of lattice beams can be replaced simpler and lighter stays, which however still are supported by the central pillar and constitutes the mount for a roof covering material of appropriate form and adapted material.

In this case at least a part of the center part 7 is designed to be rotateable about the pillar 6, whereby it is pivoted in ball bearings 23 and via a chain transmission 24 or the like only intimated is driven by a motor 25. The operation hereby may be continous with low rotational velocity or step-by-step. The rotateable center part 7 supports a radial spar, in the case shown an I-beam 26, which either can be cantilever or such as is shown at the end opposite the center is provided with a wheel 28, biased by a spring 27 which wheel is supported and rolls against a path 29 provide along the inner circumference of the reservoir. The radial spar 26 is preferably anchored to center part 7 via rotateable connection means 30, which allows the spar to be folded upwards about its fixing point against the center part 7. The spar 26 supports a rack 31, which serves as a race track for a drive mechanism 32 with pinion 33, which drive mechanism thereby is displaceable in the longitudinal direction of the beam. The drive mechanism supports a shaft 34 which can be elevated and lowerd by means not shown, preferably a hydraulic piston, which extends downwards from the spar 26 and supports a manure stirrer 35, which is constituted by a rotor provided with knives 36 and counter knives 37, which rotor is rotateable by means of a motor 38 located above the rotor, that is, it is not completely immersed in the manure contents of the reservoir. At the bottom of the rotor the knives are preferably designed as bucket wheels 39, which by rotation of the stirrer 35 sucks bottom sediment from the bottom of the reservoir and prevents the manure material under the lower range of the manure stirrer 35 from becoming compact and hard to disintegrate by the time passing. Since the spar 26 can be twisted 360° about the central pillar 5, at the same time as manure stirrer 35 by means of the drive mechanism 32 can be moved along the total radial area of the reservoir it is achieved that the knives 36 and counter knives 37 in whole manure reservoir 3 can process and at demand disintegrate the material to attain the desired consistency. Preferably there are means not shown, which limit the pivotability for the spar 26 to 360°, whereby the spar can be turned one revolution and then by reversering of the drive be operated back 360° in the opposite direction and so on.

Through the liquid supply indicated in Fig. 1 at 12 if required, further liquid can be added to increase the possibility of being pumped, at the same time as the cover entails that there will be no risk of uncontrollable liquid supply.

Fig. 5 discloses in section along the line V-V in Fig. 6 a manure stirrer applied in a manure reservoir with rectangular form. Of natural reasons this manure stirrer can not move in a circular area about a center pillar. Instead there is a manure stirrer 35, of same type as that according to Fig. 4, drivably arranged with its run beam 31 as a traverser, which runs on two, along two opposite walls of the reservoir provided support beams 40, and is driven in this movement by means of a driving device not shown and of known type. Except for this travelling movement of the race track 31 of manure stirrer thus occurs linearly ahead and backwards instead of a circular path the stirrer 35 at this application and its drive as to the rest does not differ from that the according to Fig. 4. In Fig. 6 is shown diagramatically in a view from the above the device according to Fig. 5. For the sake of clarity in this case the manure reservoir is shown without copver, but preferably the reservoir even here is provided with a roof structure, which however in this case can be of a more conventional type which does not constitute part of the invention, but even here the support beams 40 of the traverser can be suspended in the underpart of roof structure.

The invention is not limited to the embodiments shown in the drawings and in connection thereto described embodiments. Thus one may for example concieve that the drive for the rotation of the center part at the embodiment according to Fig. 4 instead is provided at the outer edge of the beam, whereby a drive mechanism there provided operates directly against the reservoir wall.

## Claims

1. Device at reservoirs, in particular manure reservoirs of the type, which includes a container (3) closed att the bottom with means for supply of at least semi-liquid material, and with means constituting at least one stirrer (35) immerseable in the container and movable therein, rotatable about an axis, extending downwards, which stirrer is constituted by a rotor, rotably suspended in a holder (37) driven by a motor (38),
**characterized therein,**
that the rotor is provided with knives (36) arranged to cooperate with counter knives (37) developed at the holder intended in cooperation to disintegrate and stir material stored in the reservoir.

2. Device according to patent claim 1,
**characterized therein,**
that the stirrer (35) is provided with lower knives shaped as bucket blades (39), and arranged to suck up material during rotation from the area under the stirrer.

3. Device according to patent claim 1 or 2,
**characterized therein,**
that the manure stirrer (35) is drivable along a race track (31), which is movably arranged to allow location of the manure stirrer over the whole area of the container.

4. Device according to patent claim 3, where the container has cylindric form,

**characterized therein,**
that the race track (31) with its one end is pivotably arranged in a horizontal plane about a pillar in the reservoir (3) centrally located, vertically provided pillar (5), arranged to rest on bottom of the container.

5. Device according to patent claim 4,
**characterized therein,**
that the pillar (5) is provided to extend with its upper end (6) above the upperedge of the reservoir, and to support by its above the container protruding part a hub shaped center (7) from which the race track (31) extends in cantilever.

6. Device according to claim 4,
**characterized therein,**
that the race track (31) at its end counter facing the center part (7) supports against a track (29) provided in the internal wall of the reservoir.

7. Device according to any of the patent claims 3 - 6,
**characterized therein,**
that the race track (31) is constituted by a rack provided in an I-beam (26), along which the manure stirrer (35) is movable in radial direction through driving by means of pinions (33).

8. Device according to any of the patent claims 3 - 7,
**characterized therein,**
that the hub shaped center part (7) as well supports a roof structure (8), centered about the upper part of the pillar including trusses (20) with roof covering (21) provided thereon.

9. Device according to patent claim 8,
**characterized therein,**
that the roof covering is constituted by cake piece shaped, cover elements (21) overlapping each other.

10. Device according to patent claim 3 at rectangular reservoir,
**characterized therein,**
that race track (31) is designed as a traverser driveable along two support beams (40) which are provided along two opposite wall sides in the reservoir (3).

11. Device according to patent claim 10,
**characterized therein,**
that the support beams (40) are arranged to hang down from a overhead roof structure.

**European Patent Office**

## EUROPEAN SEARCH REPORT

Application Number

EP 92 85 0099

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 406 037 (BLUM A.) <br> * page 11, line 7 - page 13, line 17; figures 1-3 * | 1,2 | A01C3/02 |
| A | GB-A-1 435 690 (HOWARD HARVESTORE) <br> * page 2, line 124 - page 3, line 33; figures 3,4 * | 3-7,10 | |
| A | GB-A-1 108 386 (A.O.HARVESTORE PRODUCTS INC.) <br> * page 2, line 116 - page 3, line 18; figures 1-3 * | 9 | |
| A | DE-A-2 033 044 (FÖRDERTECHNIK STREICHER GMBH.) <br> * page 4, paragraph 7 - page 6, paragraph 3; figures 1,2 * | 1 | |
|  |  |  | TECHNICAL FIELDS SEARCHED (Int. Cl.5) |
|  |  |  | A01C |

The present search report has been drawn up for all claims

| Place of search | Date of completion of the search | Examiner |
|---|---|---|
| THE HAGUE | 11 AUGUST 1992 | ELSWORTH D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)